# EUROPEAN PATENT SPECIFICATION

(11) **EP 1 441 161 B1**
(45) Date of publication and mention of the grant of the patent: **24.05.2006**
(21) Application number: 04001500.0
(22) Date of filing: 23.01.2004
(51) Int. Cl.: F16K 31/04

(54) **Automatized device for telecontrolling gearmotors coupled to ball or gate valves for nautical use**
Automatische Vorrichtung für einen mit einem Kugel- oder Schieberventil gekoppelten fernmanipulierbaren Motor für den Schiffsgebrauch
Dispositif automatique pour un moteur couplé à une vanne ou un robinet sphérique pour l'usage marin

(30) Priority: 24.01.2003 IT MI20030118
(43) Date of publication of application: 28.07.2004
(73) Proprietor: Tommasi, Alessandro, 55049 Viareggio (LU) (IT)
(72) Inventor: Tommasi, Alessandro, 55049 Viareggio (LU) (IT)
(74) Representative: Cicogna, Franco

(56) References cited:
- US-A- 3 914 676
- US-A- 4 556 832
- US-A- 4 624 280
- US-A- 4 816 987
- US-A- 4 902 945

## Description

### BACKGROUND OF THE INVENTION

The present invention relates to an automatized device for telecontrolling gearmotors coupled to ball or gate valves for nautical use.

As is known, in machine rooms or bilges of vessels and boats in general, are conventionally provided a plurality of ball and gate valves, which, at present, are driven by manual driving means arranged near said valves.

The valve controlling operations, more specifically, cannot be performed remotely and, accordingly, the vessel controlling persons on the pilot bridge are necessarily compelled to transmit driving instruction for driving the mentioned valves to the persons in the machine room or bilge of the vessel or boat.

Thus, it is necessary that personnel be present near the valves to be operated, and this is mainly true for large size vessels and boats.

### SUMMARY OF THE INVENTION

Accordingly, the aim of the present invention is to allow the mentioned ball and gate valves to be directly controlled from the pilot bridge.

According to one aspect of the present invention, the above aim, as well as yet other objects, which will become more apparent hereinafter, are achieved by an automatized device, specifically designed for nautical use, for remotely controlling ball or gate valves, according to claim 1.

A device comprising the features of the preamble of claim 1 has been disclosed in document US 4 556 832.

### BRIEF DESCRIPTION OF THE DRAWINGS

Further characteristics and details of the present invention will become more apparent hereinafter from the following detailed disclosure of a preferred embodiment thereof, which is illustrated, by way of an indicative, but not limitative, example, in the accompanying drawings, where:
Figure 1 is a schematic view showing an electric diagram for allowing a valve to be opened and/or closed;
Figure 2 illustrates a detail of a motor driving a shaft coupled to the ball or gate element of a valve;
Figure 3 illustrates a schematic diagram of an electric circuit supplying a motor remotely driving a valve, arranged at a place remote from the control panel therefor;
   and

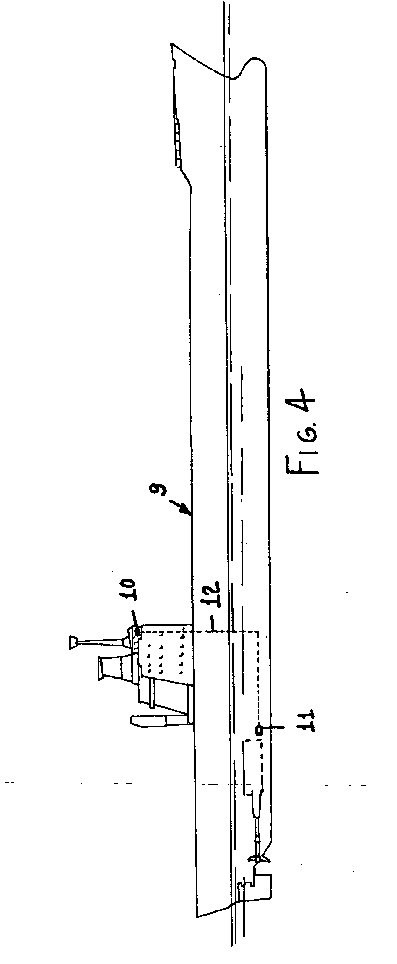

Figure 4 is a schematic view illustrating a vessel with a transmission line for transmitting therethrough a driving electric pulse, for driving, for the pilot bridge, a valve arranged in the vessel bilge.

### DESCRIPTION OF THE PREFERRED EMBODIMENT

With reference to the number references of the above mentioned drawings, the device according to the present invention comprises a control panel 2 which, on a vessel or boat of small size, will be an individual control panel, arranged on the pilot bridge.

For boats and vessels 9 of larger size, the invention provides to use two control panels, that is one arranged in the machine room 11 and the other arranged on the pilot bridge 10, said control panels being coupled by a coupling line 12.

In this connection, it should be pointed out that on boats and vessels 9 the automatized device according to the present invention will constitute a very practical and useful device, since it will assure a great safety with respect to the power ratio between a motor 8 and valve 4, while facilitating the opening and closing operations of the valve.

In particular, on the control panel 2, the valve opening and closing means, or off/on means, will be used for driving or controlling:
- the anti-fire switch for starting and stopping the anti-fire pump;
- a further switch for starting and stopping the pump for washing the vessel bridges and chains;
- a further switch for starting and stopping a further pump for sucking air and water in the vessel bilges;
- a further switch for starting and stopping the fuel pump sucking diesel fuel from the diesel fuel tanks;
- yet another switch for starting and stopping yet another pump for sucking any other materials.

More specifically, the main control panel comprises:
- a thermal-magnetic switch for protecting the electric circuit;
- a red lamp operating as a signalling lamp L3 for indicating a power-on condition;
- a pushbutton P1 for switching on the valve 4 and a related lamp L1 for signalling the switching on operation;
- a pushbutton P2 for switching off the valve and a related signalling lamp L2 for signalling that this switching off operation has been performed;
- said panel 2 being preferably provided with screen printed wordings.

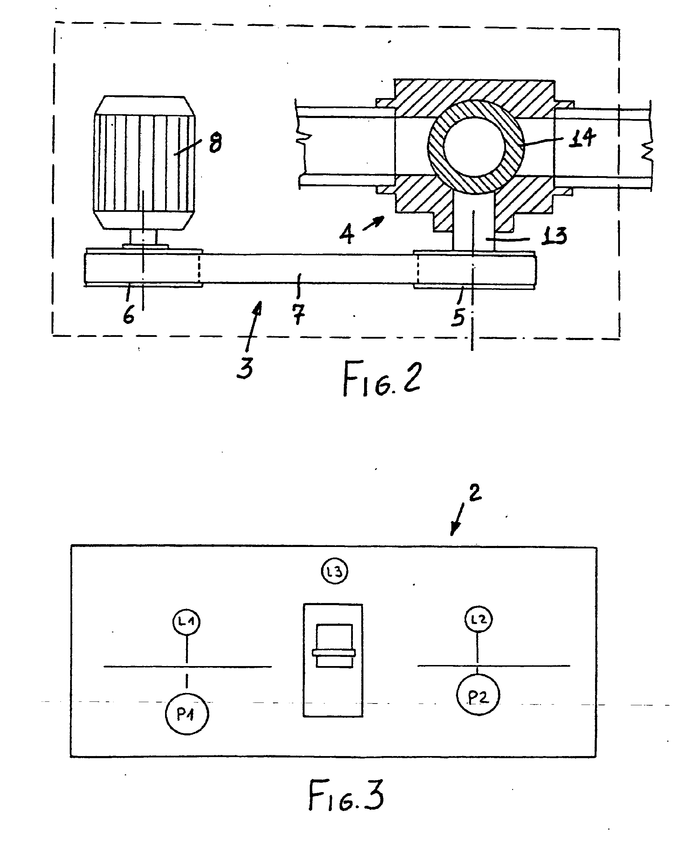

For allowing the electric circuit to be operated, it is necessary to follow the following procedure:
- the switch INT1 must be closed or switched on and then, by a simple pressure on one of the two pushbuttons, the circuit shown in figure 3 is operated both in its opening and closing conditions.

To close the valve 4, it is necessary to press or operate the pushbutton P1.

Thus, the contact of the pushbutton R1¹ will be a self-holding contact.

After having the pressed and then released the pushbutton P1, the circuit will remain operating so as to allow the gearmotor to achieve a desired operating condition.

Then, the gearmotor 8 will be switched off by operating a microswitch M1, driven by a precalibrated cam C1.

At the end of the operating cycle, the microswitch M1 will operate to stop the gearmotor 8 and switch on the signalling lamp L1, which will signal that the operation has been carried out.

The contact R1² is provided to supply the motor 8 with electric current to allow the motor to rotate in a required direction.

The contact R1³ is provided to protect the circuit and, accordingly, it operates to prevent any undesired operations to be performed, such as, for example, a simultaneous pressing of the two pushbuttons P1 and P2.

The contact R1³ is an interlocking contact, providing a very high safety operation.

For the switching off or opening section, the relay R2 and contacts R2¹, R2² R2³ and related cam will operate in an analogous manner to that of R1.

This circuit has been designed for operating an electric motor 8.

It should be apparent that the circuit 1 could also operate, through solenoid valves, pneumatic and hydraulic motors.

Said motors 8 through belts 7 and pulleys 5 and 6, or pinions and related chains or other like elements, will transmit the opening and closing movement to a shaft 13 coupled to the balls or gates 14 of the valves 4, which will be accordingly automatically driven.

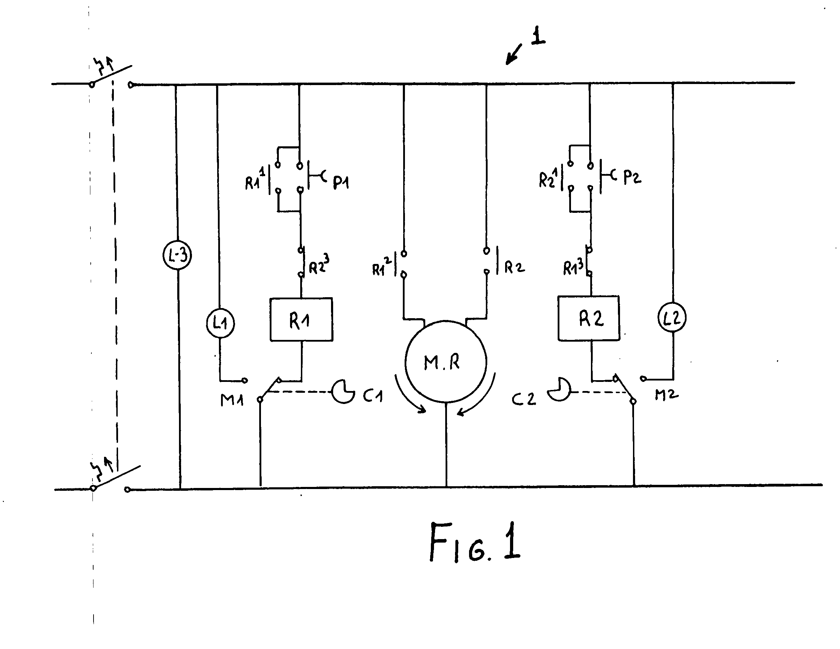

The control circuit for operating the device according to the present invention, as shown in figure 1, comprises a control panel 2, including a signaling lamp L1 signalling a closure condition, a further signalling lamp L2 signalling an opening condition of the valve, and a LINE signalling lamp.

A protection switch INT1, a closure pushbutton P1 and valve opening pushbutton P2 are moreover provided.

Figure 3 shows a control panel including signalling lamps L1, L2 and L3 for signalling a closing condition, an opening condition and an energized line condition.

R1 and R2 are two relays, and C1 and C2 are two cams.

Moreover, are herein shown two further pushbuttons P1 and P2 for closing and opening the circuit.

The electric circuit 1 comprises moreover auxiliary contacts R1¹, R2² and R3³, two microswitches M1 and M2, a switch INT1 and a gearmotor MR driving the valve.

While the device of the invention has been disclosed with reference to a preferred embodiment thereof, it should be apparent that the disclosed embodiment is susceptible to several modifications and variations, all of which will come within the scope of the invention.

## Claims

1. An automatized device, specifically designed for nautical use, for telecontrolling gearmotors coupled to ball or gate valves, said device comprising a control panel including opening and closing pushbuttons for switching on and off an electric circuit controlling respective gearmotors, which are driven electrically, pneumatically or hydraulically and coupled to said valve assemblies, **characterized in that** said circuit (1) is designed for operating, through solenoid valves, pneumatic and hydraulic motors, and that each said gearmotor is switched off by a microswitch M1 driven by a precalibrated cam C1.

2. A device, according to claim 1, **characterized in that** said device comprises a pushbutton P1 which, as it is pressed and released, causes said circuit to operate so as to allow said gearmotor to achieve a preset operating condition.

3. A device, according to claims 1 and 2, **characterized in that**, after an operating cycle, a microswitch M1 included in said circuit operates to stop said gearmotor (8) and energize a signalling lamp L1 for signalling that the stopping operation has been performed.

4. A device, according to one or more of the preceding claims, **characterized in that** said device further comprises a relay R1 for supplying with current said gearmotor to allow said gearmotor to operate in a preset rotary direction.

5. A device, according to one or more of the preceding claims, **characterized in that** said device further comprises a contact R1³ which operates to protect said circuit, thereby preventing any undesired operations from occurring, such as a simultaneous pressing of the two pushbuttons P1 and P2.

6. A device, according to claim 5, **characterized in that** said contact R1³ is an interlocking contact, providing a maximum operative safety.

7. A device, according to one or more of the preceding claims, **characterized in that** said device comprises an opening circuit section, including a relay R2 and a relay contact R2¹, R2², R2³ as well as an operating cam which operate in a same manner as said contact R1.

8. A device, according to one or more of the preceding claims, **characterized in that** said motors, through belts and pulleys, or pinions and chains or other equivalent elements, open and close said valve ball and gate elements, thereby automatically operating said valves.

9. A device, according to one or more of the preceding claims, **characterized in that** said control circuit comprises a control panel (2) including a signalling lamp L1 for signalling a valve closure, a signalling lamp L2 for signalling a valve opening, and an energized line signalling lamp.

10. A device, according to one or more of the preceding claims, **characterized in that** said device further comprises a protection switch INT1, a closure pushbutton P1 and a further pushbutton P2 for opening the valve.

11. A device, according to one or more of the preceding claims, **characterized in that** said device comprises an electric circuit including signalling lamps L1, L2 and L3 for signalling a closure condition, an opening condition and an energized line condition.

12. A device, according to one or more of the preceding claims, **characterized in that** said device further comprises two relays R1 and R2 and two cams C1 and C2.

13. A device, according to one or more of the preceding claims, **characterized in that** said device comprises a circuit including auxiliary contacts R1¹, R2², R3³ and two microswitches M1 and M2, a further switch INT1 and a gearmotor MR driving a valve.

## Patentansprüche

1. Automatisierte Vorrichtung, die speziell für den Schiffsgebrauch entworfen wurde, um Getriebemotoren, die an ein Kugel- oder Schieberventil gekoppelt sind, fernzusteuern, wobei die Vorrichtung ein Steuerpult mit Öffnungs- und Schließ-Schaltknöpfen umfasst, um einen elektrischen Stromkreis ein- und auszuschalten, der die jeweiligen Getriebemotoren, die elektrisch, pneumatisch oder hydraulisch angetrieben werden und mit den Ventilanordnungen gekoppelt sind, steuert, **dadurch gekennzeichnet, dass** der Stromkreis (1) entworfen ist, um pneumatische und hydraulische Motoren durch Magnetventile zu betreiben, und dass jeder Getriebemotor durch einen Mikroschalter M1, der von einer vorkalibrierten Nocke C1 angetrieben wird, ausgeschaltet wird.

2. Vorrichtung nach Anspruch 1, **dadurch gekennzeichnet, dass** die Vorrichtung einen Schaltknopf P1 umfasst, der, wenn er gedrückt oder gelöst wird, ein Betreiben des Stromkreises verursacht, und **dadurch** ermöglicht, dass der Getriebemotor einen vorbestimmten Betriebszustand erreicht.

3. Vorrichtung nach Ansprüchen 1 und 2, **dadurch gekennzeichnet, dass** nach einem Arbeitszyklus ein im Stromkreis integrierter Mikroschalter M1 tätig wird, um den Getriebemotor (8) anzuhalten und eine Signallampe L1 zu erregen, um zu signalisieren, dass der Anhaltevorgang ausgeführt wurde.

4. Vorrichtung nach einem oder mehreren der vorhergehenden Ansprüche, **dadurch gekennzeichnet, dass** die Vorrichtung weiterhin ein Relais R1 umfasst, um den Getriebemotor mit Strom zu versorgen, um zu ermöglichen, dass der Getriebemotor in einer vorbestimmten Rotationsrichtung arbeitet.

5. Vorrichtung nach einem oder mehreren der vorhergehenden Ansprüche, **dadurch gekennzeichnet, dass** die Vorrichtung weiterhin einen Kontakt R1³ umfasst, der in Betrieb ist, um den Stromkreislauf zu schützen, und **dadurch** verhindert, dass unerwünschte Vorgänge auftreten, wie zum Beispiel ein gleichzeitiges Drücken der zwei Schaltknöpfe P1 und P2.

6. Vorrichtung nach Anspruch 5, **dadurch gekennzeichnet, dass** der Kontakt R1³ ein Sperrkontakt ist, der maximale Betriebssicherheit bereitstellt.

7. Vorrichtung nach einem oder mehreren der vorhergehenden Ansprüche, **dadurch gekennzeichnet, dass** die Vorrichtung einen sich öffnenden Stromkreisabschnitt umfasst, der ein Relais R2 und einen Relaiskontakt R2¹, R2², R2³ und auch eine Betriebsnocke einschließt, welche in der gleichen Weise wie der Kontakt R1 funktionieren.

8. Vorrichtung nach einem oder mehreren der vorhergehenden Ansprüche, **dadurch gekennzeichnet, dass** die Motoren die Kugel- und Schieberelemente des Ventils durch Riemen und Scheiben oder Ritzel und Ketten oder andere dementsprechende Elemente öffnen und schließen und **dadurch** die Ventile automatisch betreiben.

9. Vorrichtung nach einem oder mehreren der vorhergehenden Ansprüche, **dadurch gekennzeichnet, dass** der Steuerstromkreis ein Steuerpult (2) umfasst, einschließlich einer Signallampe L1 zum Signalisieren, wenn sich das Ventil schließt, einer Signallampe L2 zum Signalisieren, wenn sich das Ventil öffnet, und einer Signallampe, wenn die Leitung unter Strom ist.

10. Vorrichtung nach einem oder mehreren der vorhergehenden Ansprüche, **dadurch gekennzeichnet, dass** die Vorrichtung weiterhin einen Schutzschalter INT1, einen Schaltknopf P1 zum Schließen und einen weiteren Schaltknopf P2 zum Öffnen des Ventils umfasst.

11. Vorrichtung nach einem oder mehreren der vorhergehenden Ansprüche, **dadurch gekennzeichnet, dass** die Vorrichtung einen elektrischen Stromkreis umfasst, der Signallampen L1, L2 und L3 zum Signalisieren eines geschlossenen Zustands, eines geöffneten Zustands und eines Zustands einer unter Strom stehenden Leitung einschließt.

12. Vorrichtung nach einem oder mehreren der vorhergehenden Ansprüche, **dadurch gekennzeichnet, dass** die Vorrichtung weiterhin zwei Relais R1 und R2 und zwei Nocken C1 und C2 umfasst.

13. Vorrichtung nach einem oder mehreren der vorhergehenden Ansprüche, **dadurch gekennzeichnet, dass** die Vorrichtung einen Stromkreis umfasst, der Zusatzkontakte R1³, R2³, R3³ und zwei Mikroschalter M1 und M2, einen weiteren Schalter INT1 und einen Getriebemotor MR, der ein Ventil antreibt, einschließt.

## Revendications

1. Dispositif automatisé conçu spécifiquement pour un usage nautique, pour contrôler à distance des moteurs à engrenages reliés à des soupapes à billes ou à tiroir, ledit dispositif comprenant un panneau de contrôle comportant des boutons-poussoirs d'ouverture et de fermeture pour mettre en marche et arrêter un circuit électrique contrôlant les moteurs à engrenages correspondants, qui sont entraînés de manière électrique, pneumatique ou hydraulique et reliés auxdites soupapes, **caractérisé en ce que** ledit circuit (1) est conçu pour actionner, par l'intermédiaire d'électrovannes, des moteurs pneumatiques et hydrauliques et **en ce que** chacun desdits moteurs à engrenages est arrêté à l'aide d'un micro-interrupteur M1 actionné par une came pré-calibrée C1.

2. Dispositif selon la revendication 1, **caractérisé en ce que** ledit dispositif comprend un bouton-poussoir P1 qui, lorsqu'il est actionné puis relâché, fait fonctionner ledit circuit de façon à permettre audit moteur à engrenages d'atteindre un état de fonctionnement prédéterminé.

3. Dispositif selon les revendications 1 et 2, **caractérisé en ce que**, après un cycle de fonctionnement, un micro-interrupteur M1 inclus dans ledit circuit arrête ledit moteur à engrenages (8) et met sous tension un voyant L1 afin de signaler que l'opération d'arrêt a été effectuée.

4. Dispositif selon l'une ou plusieurs des revendications précédentes, **caractérisé en ce que** ledit dispositif comprend en outre un relais R1 permettant d'alimenter en courant ledit moteur à engrenages afin de permettre à celui-ci de fonctionner dans un sens de rotation prédéterminé.

5. Dispositif selon l'une ou plusieurs des revendications précédentes, **caractérisé en ce que** ledit dispositif comprend en outre un contact R1³ qui sert à protéger ledit circuit en empêchant toute opération indésirable d'être effectuée, comme un actionnement simultané des deux boutons-poussoirs P1 et P2.

6. Dispositif selon la revendication 5, **caractérisé en ce que** ledit contact R1³ est un contact de verrouillage qui permet une sécurité de fonctionnement maximale.

7. Dispositif selon l'une ou plusieurs des revendications précédentes, **caractérisé en ce que** ledit dispositif comprend une section à circuit d'ouverture, comprenant un relais R2 et un contact à relais R2¹, R2², R2³, ainsi qu'une came d'actionnement qui fonctionne de la même manière que ledit contact R1.

8. Dispositif selon l'une ou plusieurs des revendications précédentes, **caractérisé en ce que** lesdits moteurs ouvrent et ferment lesdites soupapes à billes et à tiroir par l'intermédiaire de courroies et de poulies ou de pignons et de chaînes ou d'autres éléments équivalents, actionnant ainsi automatiquement lesdites soupapes.

9. Dispositif selon l'une ou plusieurs des revendications précédentes, **caractérisé en ce que** ledit circuit de contrôle comprend un panneau de contrôle (2) comprenant un voyant L1 permettant de signaler la fermeture d'une soupape, un voyant L2 permettant de signaler l'ouverture d'une soupape et un voyant de ligne sous tension.

10. Dispositif selon l'une ou plusieurs des revendications précédentes, **caractérisé en ce que** ledit dispositif comprend en outre un interrupteur de protection INT1, un bouton-poussoir de fermeture P1 et un autre bouton-poussoir P2 pour ouvrir la soupape.

11. Dispositif selon l'une ou plusieurs des revendications précédentes, **caractérisé en ce que** ledit dispositif comprend un circuit électrique comprenant des voyants L1, L2 et L3 permettant de signaler un état de fermeture et un état de ligne sous tension.

12. Dispositif selon l'une ou plusieurs des revendications précédentes, **caractérisé en ce que** ledit dispositif comprend en outre deux relais R1 et R2 et deux cames C1 et C2.

13. Dispositif selon l'une ou plusieurs des revendications précédentes, **caractérisé en ce que** ledit dispositif comprend un circuit comprenant des contacts auxiliaires R2¹, R2², R2³, et deux micro-interrupteurs M1 et M2, un autre interrupteur INT1 et un moteur à engrenages MR entraînant une soupape.
